(19) Europäisches Patentamt
European Patent Office
Office européen des brevets

(11) **EP 4 342 864 A1**

(12) **EUROPEAN PATENT APPLICATION**
published in accordance with Art. 153(4) EPC

(43) Date of publication:
**27.03.2024 Bulletin 2024/13**

(21) Application number: **22858491.8**

(22) Date of filing: **17.08.2022**

(51) International Patent Classification (IPC):
**C04B 22/08** (2006.01)     **C04B 14/10** (2006.01)
**C04B 14/22** (2006.01)     **C04B 18/10** (2006.01)
**C04B 18/14** (2006.01)     **C04B 22/10** (2006.01)
**C04B 28/02** (2006.01)

(52) Cooperative Patent Classification (CPC):
**C04B 14/10; C04B 14/22; C04B 18/10;
C04B 18/14; C04B 22/08; C04B 22/10;
C04B 28/02;** Y02W 30/91

(86) International application number:
**PCT/JP2022/031074**

(87) International publication number:
**WO 2023/022173 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2021 JP 2021134147**

(71) Applicant: **Denka Company Limited
Tokyo 103-8338 (JP)**

(72) Inventors:
• **MORI, Taiichiro
Tokyo 103-8338 (JP)**
• **SHIMAZAKI, Daiki
Tokyo 103-8338 (JP)**
• **MAEDA, Takumi
Tokyo 103-8338 (JP)**

(74) Representative: **Ter Meer Steinmeister & Partner
Patentanwälte mbB
Nymphenburger Straße 4
80335 München (DE)**

(54) **CEMENT ADMIXTURE, METHOD FOR PRODUCING CEMENT ADMIXTURE, AND CEMENT COMPOSITION**

(57)     Provided is a cement admixture containing a dicalcium silicate compound having an average particle diameter of 5 to 100 μm as measured by microscopic observation and also having an average aspect ratio represented by ((major axis diameter)/(minor axis diameter)) of 1.3 or more. It becomes possible to provide a cement admixture having excellent fire resistance and also having an excellent retained ratio of compressive strength, an excellent retained ratio of Young's modulus after the reception of heat and excellent carbonation resistance after the reception of heat.

EP 4 342 864 A1

**Description**

Technical Field

The present invention relates to a cement admixture used in the civil engineering field, the construction field, etc., a method for producing the cement admixture, and a cement composition.

Concrete used in architectural structures such as high-rise buildings and civil engineering structures such as tunnels is required to have fire resistance performance. Adding organic fibers is said to be an effective for improving the fire resistance performance of concrete. This is a technology that prevents the concrete from exploding by vaporizing organic fibers through combustion, creating numerous cavities, and creating cracks between the cavities, creating a path for water vapor generated from the concrete structure to escape to the outside (Patent Literatures 1, 2, 3).

On the other hand, since concrete uses a large amount of cement as a raw material, it is said to be a material that emits a large amount of $CO_2$. This is mainly due to the fact that in the cement production process, a large amount of fossil fuel is used to obtain combustion energy for the furnace, and in addition, a decarboxylation reaction of limestone ($CaCO_3 \rightarrow CaO + CO_2$) occurs. Reducing $CO_2$ emissions from concrete has become an important theme as part of global warming countermeasures.

In order to reduce the total amount of $CO_2$ emitted when producing concrete products, it is effective that the used amount of cement can be reduced by incorporating large amounts of industrial by-products (pulverized blast furnace slag, fly ash, etc.) as cement substitutes, and various studies are underway.

In addition, a technique is known for obtaining highly durable concrete products having densified surface layers from $CO_2$ absorption, by forcibly performing a carbonation (salt) curing of concrete blended with non-hydraulic compounds such as $\gamma$-$C_2$S ($\gamma$-$2CaO \cdot SiO_2$; also called belite $\gamma$ phase) as an admixture (for example, Patent Literature 3). $\gamma$-$C_2$S does not undergo hydration reaction, but reacts with $CO_2$ to produce gels rich in $CaCO_3$ and $SiO_2$. These products fill the voids in the cement matrix and dramatically improve the durability of the surface layer of the concrete product. In this case, the total $CO_2$ emissions in obtaining the concrete product are reduced by the amount of $CO_2$ absorbed by the concrete during carbonation (salt) curing (Patent Literatures 4 and 5).

Citation List

Patent Literature

PTL 1: JPH 5-220881A
PTL 2: JP2010-120839A
PTL 3: JP2018-20944A
PTL 4: JPH10-194798A
PTL 5: JP2007-22878A

Summary of Invention

Technical Problem

In the techniques described in the above Patent Literatures 1 to 3, when the temperature rises rapidly, path formation due to fiber combustion may not be completed in time, and explosion may occur. In addition, since conventional fireproof concrete contains organic fibers, there is a possibility that toxic gases such as carbon monoxide may be generated depending on the combustion conditions, and it can also be considered that if a fire breaks out in a closed space, the damage may spread.

In addition, in highly durable concrete blended with a non-hydraulic compound such as $\gamma$-$C_2$S shown in Patent Literature 4, it is assumed that the structure to be cured is placed in a shielded space that can maintain a predetermined carbon dioxide concentration. Therefore, in order to make a huge concrete structure that cannot be accommodated in a curing facility to be cured, a cement admixture that can accelerate the carbonation (salt) of the blended non-hydraulic compound is required.

The present invention is to provide a cement admixture which has excellent fire resistance that does not generate toxic gas even when exposed to high temperatures due to fire, etc., and has an excellent retained ratio of compressive strength and a retained ratio of Young's modulus after the reception of heat, and excellent carbonation resistance after the reception of heat.

Solution to Problem

As a result of intensive research to solve the above problems, the present inventors discovered that a cement admixture containing a dicalcium silicate compound having a specific shape could solve the above problems, and completed the present invention. That is, the present invention is as follows.

[1] A cement admixture containing a dicalcium silicate compound having an average particle diameter of 5 to 100 $\mu$m as measured by microscopic observation and also having an average aspect ratio represented by (major axis diameter/minor axis diameter) of 1.3 or more.

[2] The cement admixture according to the above item [1],
in which the dicalcium silicate compound has an average value of circularity expressed by ($4 \times$ circumference ratio $\pi \times$ area/(square of circumferential length)) of 0.8 or less.

[3] The cement admixture according to the above item [1] or [2],
in which the chemical composition is 44 to 75 parts by mass of CaO, 18 to 55 parts by mass of $SiO_2$, 1 to 3 parts by mass of $Al_2O_3$, 0 to 5 parts by mass of MgO, and 0 to 2 parts by mass of $SO_3$, with respect to 100 parts by mass of the total of CaO, $SiO_2$, $Al_2O_3$, MgO, and $SO_3$, and in which a Blaine specific surface area value is 2,000 to 6,000 $cm^2$/g.

[4] The cement admixture according to any one of the above items [1] to [3], further containing 5 parts by mass or less of calcium carbonate with respect to 100 parts by mass of the cement admixture.

[5] The cement admixture according to any one of the above items [1] to [4], furthermore containing slag and/or pozzolanic substances.

[6] The cement admixture according to the above item [5],
in which the slag and/or pozzolanic substances have one or more selected from the group consisting of blast furnace slag (air-cooled blast furnace slag, granulated blast furnace slag), steelmaking slag (converter slag, electric furnace slag), fly ash, silica fume, metakaolin, pulp sludge incineration ash, sewage sludge incineration ash, volcanic glass fine powder, and waste glass powder.

[7] The cement admixture according to the above item [5] or [6],
in which a mixing ratio of the dicalcium silicate compound and the slag and/or pozzolanic substances is 10/1 to 1/10 in mass ratio.

[8] A method for producing a cement admixture, including adjusting a clinker to have a Blaine specific surface area value of 2,000 to 6,000 $cm^2$/g, the clinker being obtained by blending a raw material containing CaO, a raw material containing $SiO_2$ and a raw material containing $SO_3$ so that the $CaO/SiO_2$ molar ratio is 1.3 to 3.0 and the $SO_3$ content is 0 to 3% by mass, and heat-treated at 1,000 °C or higher and 1,800 °C or lower.

[9] A cement composition containing:

cement; and
the cement admixture according to any one of the above items [1] to [7].

Advantageous Effects of Invention

According to the present invention, a cement admixture which has excellent fire resistance, and has an excellent retained ratio of compressive strength and a retained ratio of Young's modulus after the reception of heat, and excellent carbonation resistance after the reception of heat.

Description of Embodiments

Hereinafter, an embodiment of the present invention (the present embodiment) will be described in detail. Note that parts and percentages used in this description are based on mass unless otherwise specified.

[Cement admixture]

The cement admixture according to the present embodiment contains a dicalcium silicate compound.

<Dicalcium silicate compound>

The dicalcium silicate compound according to the present invention is characterized by having an average particle diameter of 5 to 100 $\mu$m and also having an average aspect ratio represented by (major axis diameter/minor axis diameter) of 1.3 or more.

In addition, the dicalcium silicate compound preferably has an average value of circularity (hereinafter referred to as "average circularity") expressed by (4 $\times$ circumference ratio $\pi$ $\times$ area/(square of circumferential length)) of 0.8 or less.

As mentioned above, the average particle diameter of the dicalcium silicate (hereinafter sometimes referred to as "DCS") compound must be in the range of 5 to 100 $\mu$m. When the average particle diameter deviates from 5 to 100 $\mu$m, the retained ratio of compressive strength tends to decrease significantly with respect to the heating temperature. From the above viewpoint, the average particle diameter of the DCS compound is more preferably in the range of 10 to 90 $\mu$m, and still more preferably in the range of 15 to 80 $\mu$m.

As mentioned above, the average aspect ratio expressed by (major axis diameter/minor axis diameter) of the dicalcium silicate compound must be 1.3 or more. When the average aspect ratio is smaller than 1.3, the carbonation depth after heating tends to increase. From the above viewpoint, the average aspect ratio is more preferably 1.5 or more, and still more preferably 1.7 or more.

Furthermore, the average circularity of the dicalcium silicate compound is preferably 0.8 or less, as described above. When the average circularity is 0.8 or less, it is advantageous in improving fire resistance. From the above viewpoint, the average circularity is more preferably 0.75 or less, and still more preferably 0.7 or less. There is particularly no limit to the lower limit of the average circularity, but it is usually about 0.5.

Note that, as described above, the average circularity indicates the average value of circularity expressed as 4 $\times$ circumference ratio $\pi$ $\times$ area/(square of circumferential length).

<Method for measuring average particle diameter, average aspect ratio, and average circularity>

The average particle diameter, average aspect ratio, and average circularity of the dicalcium silicate compound can be measured as follows.

(1) For a plurality of dicalcium silicate compounds, an image of the dicalcium silicate compounds projected on a plane, is obtained. Such an image can be obtained, for example, by photographing a plurality of dicalcium silicate compounds from one direction, or by photographing a cross section of a porous layer containing the dicalcium silicate compounds.

(2) From the obtained image, the particle diameter, the aspect ratio, and the circularity (area, circumferential length) of each grain of the dicalcium silicate compound are measured. The particle diameter, aspect ratio, and circularity (area, circumferential length) can be measured using appropriate image analysis software (IMAGEJ, etc.). The number of particle points to be measured is preferably in the range of 3,000 to 5,000 points. When it is 3,000 points or more, it is preferable because the measurement error is small, and when it is 5,000 points or less, it is preferable because it reduces the physical burden of the measurer.

(3) From the measured particle diameter, aspect ratio, and circularity, the respective average values can be calculated to obtain the average particle diameter, the average aspect ratio, and the average circularity.

Note that the aspect ratio is a value expressed as (major axis diameter)/(minor axis diameter). It shows that the closer this value is to 1, the closer to a perfect circle it is.

There is no particular problem even if the dicalcium silicate compound in the present invention contains MgO, $R_2O$ (R is an alkali metal), etc., as long as the total amount is 10% by mass or less. Further, as long as the total amount of the DCS compound in the present invention is 10% by mass or less, there is no particular problem even if the DCS compound contains a glass phase generated by rapid cooling.

The fineness of the dicalcium silicate compound is preferably 2,000 to 6,000 cm$^2$/g, more preferably 2,500 to 5,000 cm$^2$/g in Blaine specific surface area value (hereinafter referred to as "Blane value"). When it is 2,000 cm$^2$/g or more, sufficient compressive strength development and fire resistance performance can be obtained. On the other hand, when it is 6,000 cm$^2$/g or less, carbonation resistance after the reception of heat can be obtained.

The DCS compound is obtained by mixing a raw material containing CaO, a raw material containing $SiO_2$, a raw material containing $Al_2O_3$, etc., and subjecting the mixture to heat treatment such as firing in a kiln or melting in an electric furnace. The heat treatment temperature depends on the composition of the raw materials, but is preferably 1,400 °C or higher and 1,800 °C or lower, more preferably 1,450 °C or higher and 1,600 °C or lower, and still more preferably 1,450 °C or higher and 1,550 °C or lower. When the temperature is lower than 1,400 °C, the reaction will not proceed efficiently and unreacted $Al_2O_3$ may remain, making it impossible to obtain dicalcium silicate. On the other hand, when the temperature exceeds 1,800 °C, coating will easily form during heat treatment. This may not only make operation difficult, but also reduce energy efficiency.

The content of the dicalcium silicate compound in the present admixture is preferably 35% or more, more preferably 45% or more. Further, the upper limit of the content of the dicalcium silicate compound is not particularly limited.

Examples of a method for quantifying the dicalcium silicate compound in the present admixture include the Rietveld method using powder X-ray diffraction.

<Chemical composition of Cement admixture>

The cement admixture according to the present embodiment preferably has a chemical composition in the range of 44 to 75 parts of CaO, 18 to 55 parts of $SiO_2$, 1 to 3 parts of $Al_2O_3$, 0 to 5 parts of MgO, 0 to 2 parts of $SO_3$; more preferably has a chemical composition in the range of 49 to 70 parts of CaO, 23 to 50 parts of $SiO_2$, 1 to 2 parts of $Al_2O_3$, 0 to 3 parts of MgO, 0 to 1 parts of $SO_3$; with respect to 100 parts of the total of CaO, $SiO_2$, $Al_2O_3$, MgO, and $SO_3$. When it is within this range, it is preferable because it has advantageous such that the time required to reach demoldable strength will not be extended, the compressive strength will be maintained, the time required to impart fire resistance will not be extended, and the carbonation depth after the reception of heat will be reduced.

Further, the cement admixture according to the present embodiment may further contain calcium carbonate in an amount of 5 parts or less with respect to 100 parts of the cement admixture. By containing calcium carbonate, it has advantages such as increasing the storage stability of cement admixtures and improving the strength development of produced concrete. From the above viewpoint, the content of calcium carbonate is more preferably in the range of 0.5 to 3 parts.

<Raw materials>

The raw materials used for producing the cement admixture used in the present invention will be explained.

«Raw materials containing CaO»

Raw materials containing CaO are not particularly limited. Commercially available industrial raw materials, for example quicklime (CaO), slaked lime ($Ca(OH)_2$), and limestone ($CaCOs$), can be given. In addition, by-product slaked lime such as acetylene by-product slaked lime, industrial waste such as steel slag (converter slag, electric furnace slag), coal ash, wood biomass combustion ash, fine powder generated from waste concrete lumps, concrete sludge, and municipal waste incineration ash, etc. can also be applied as long as they do not impair the effects of the present invention. From the viewpoint of reducing non-energy-derived $CO_2$ emissions during heat treatment, it is preferable because one or two or more selected from industrial by-products containing CaO, such as by-product slaked lime, fine powder generated from waste concrete lumps, municipal waste incineration ash, and sewage sludge incineration ash, can be used. Among them, it is more preferable to use by-product slaked lime, which has a lower amount of impurities than other industrial by-products.

As the by-product slaked lime, by-product slaked lime produced in the acetylene gas production process using the calcium carbide method (there are wet and dry products depending on the acetylene gas production method), and acetylene by-product slaked lime, such as by-product slaked lime contained in the dust captured in the wet dust collection process of calcium carbide electric furnaces, can be given. The by-product slaked lime contains, for example, 65 to 95% (preferably 70 to 90%) calcium hydroxide, and in addition, contains 1 to 10% calcium carbonate and 0.1 to 6.0% (preferably 0.1 to 3.0%) of iron oxide. These ratios can be confirmed by X-ray fluorescence measurement and mass loss fractions determined by differential thermogravimetric analysis (TG-DTA) ($Ca(OH)_2$: around 405 °C to 515 °C, $CaCO_3$: around 650 °C to 765 °C). The volume average particle size measured by the laser diffraction and scattering method is about 50 to 100 $\mu$m.

Further, the moisture content measured by the loss on drying method in JIS K 0068 "Method for measuring moisture in chemical products" is preferably 10% or less. Sulfur compounds such as CaS, $Al_2S_3$, and $CaC_2/CaS$ may also be included, but the content is preferably 2% or less.

<<Raw materials containing $SiO_2$>>

The raw material containing $SiO_2$ is not particularly limited. Commercially available industrial raw materials, for example silica stone, silica sand, quartz, and diatomaceous earth, can be given. Furthermore, various siliceous dusts generated as industrial by-products such as silica fume and fly ash can also be used as long as they do not impair the effects of the present invention.

<<Raw materials containing $Al_2O_3$>>

The raw material containing $Al_2O_3$ is not particularly limited. Commercially available industrial raw materials, for example $Al_2O_3$, aluminum hydroxide, and bauxite, can begiven . Note that bauxite is desirable because it contains

$Fe_2O_3$, $SiO_2$, and $TiO_2$ together with $Al_2O_3$. On the other hand, when the raw material containing CaO or $SiO_2$ contains the necessary amount of $Al_2O_3$, it may not be necessary to use the raw material containing $Al_2O_3$.

<<MgO raw material>>

The MgO raw material used in the present invention is not particularly limited, but for example, magnesia such as fused magnesia, sintered magnesia, natural magnesia, and light burnt magnesia can be used. The MgO raw materials mentioned here refers to the one in which magnesium hydroxide ($Mg(OH)_2$) extracted from seawater by the seawater method, magnesium carbonate (MgCOs), magnesite which is natural MgO, or sintered magnesia clinker obtained by sintering natural magnesium carbonate in a rotary kiln and the like, or electro-fused magnesia clinker obtained by melting such sintered magnesia clinker in an electric furnace and the like, are crushed and screened to a specified size.

<<Raw materials containing $SO_3$>>

The raw materials containing $SO_3$ is not particularly limited, but for example, fresh gypsum, anhydrite (anhydrite), calcined gypsum (hemihydrate gypsum), and desulfurized gypsum (dihydrate gypsum), can be given.

<<Impurities>>

The CaO raw material, $SiO_2$ raw material, $Al_2O_3$ raw material, MgO raw material, and $SO_3$ raw material may contain impurities, but this is not a particular problem to the extent that it does not impair the effects of the invention. As the specific examples of impurities, $Fe_2O_3$, $TiO_2$, MnO, $Na_2O$, $K_2O$, $P_2O_5$, F, $B_2O_3$, chlorine, can be given. In addition, as the compounds that coexist, free calcium oxide, calcium hydroxide, calcium aluminate, calcium aluminosilicate, calcium ferrite and calcium aluminoferrite, calcium phosphate, calcium borate, magnesium silicate, leucite ($K_2O$, $Na_2O$)·$Al_2O_3$·$SiO_2$, spinel $MgO$·$Al_2O_3$, magnetite $Fe_3O_4$, sulfur compounds such as the aforementioned CaS, $Al_2S_3$, and $CaC_2$.CaS, can be given.

Among these impurities, the content of S (sulfur) in the dicalcium silicate compound is preferably 1.0% or less, more preferably 0.7% or less, still more preferably 0.5% or less in terms of oxide ($SO_3$). When the content is 1.0% or less, a sufficient effect of promoting carbonation (salt) can be obtained, and the coagulation and curing properties can be controlled within appropriate ranges. The S content in terms of oxide ($SO_3$) can be measured by fluorescent X-ray measurement. Note that S (sulfur) in the DCS compound may be present as long as it is about 2% in terms of oxide.

<Slag and/or pozzolanic substances>

The cement admixture of the present invention may contain slag and/or pozzolanic substances. The slag and/or pozzolanic substances are latent hydraulic substances and are not particularly limited, but for example, blast furnace slag (air-cooled blast furnace slag, granulated blast furnace slag), steelmaking slag (converter slag, electric arc furnace slag), fly ash, silica fume, metakaolin, pulp sludge incineration ash, sewage sludge incineration ash, volcanic glass fine powder, waste glass powder, and the like, can be given. These may be used alone or in combination of two or more.

Among these, granulated blast furnace slag fine powder, fly ash, silica fume, and metakaolin are preferable, from the viewpoint of maintaining the retained ratio of compressive strength and the retained ratio of Young's modulus after the sufficient reception of heat, as well as the effect of carbonation resistance after the reception of heat.

Further, the mixing ratio of the DCS compound and the slag and/or pozzolanic substance is not particularly limited, but the mass ratio is preferably 10/1 to 1/10, more preferably 5/1 to 1/5.

By setting the mixing ratio of the DCS compound and slag and/or pozzolanic substance (latent hydraulic substance) within the above range, sufficient rust prevention effect, chloride ion penetration resistance, the effect of inhibition of Ca ion elution and the improvement of self-healing ability can be obtained compared to the the case of DCS compound alone.

In addition, in the present invention, in order to maintain the retained ratio of compressive strength and the retained ratio of Young's modulus after the sufficient reception of heat, and the effect of carbonation resistance after the reception of heat, it is possible to use a cement admixture having the CaO/$SiO_2$ molar ratio of 0.15 to 0.7 and the $SO_3$ content of 0 to 3% in combination with slag and/or pozzolanic substances.

Note that this embodiment can also use industrial by-products containing non-hydraulic compounds such as $\gamma$-DCS. At this time, impurities coexist. As such industrial by-products, steelmaking slag and the like can be given.

<Method for producing cement admixture>

The cement admixture can be produced by blending a raw material containing CaO, a raw material containing

$SiO_2$ and a raw material containing $SO_3$ so that the CaO/$SiO_2$ molar ratio is 1.3 to 3.0 and the $SO_3$ content is 0 to 3%, and heat-treated at 1,000 °C or higher. The heat treatment method is not particularly limited, but can be performed using, for example, a rotary kiln or an electric furnace. Although the heat treatment temperature is not uniquely determined, it is usually conducted in the range of about 1,000 to 1,800 °C, and often conducted in the range of about 1,200 to 1,600°C.

Further, it is preferable to adjust the clinker produced as described above by screening so as to have the Blaine specific surface area described in detail below.

<Blaine specific surface area of cement admixture>

Although the Blaine specific surface area of the present admixture is not particularly limited, it is preferably 1,500 $cm^2$/g or more, and the upper limit is preferably 8,000 $cm^2$/g or less. Among these, 2,000 to 6,000 $cm^2$/g is more preferable, and 4,000 to 6,000 $cm^2$/g is most preferable. When the Blaine specific surface area is 1,500 $cm^2$/g or more, good material separation resistance is obtained and the effect of promoting carbonation (salt) is sufficient. In addition, by setting the Blaine specific surface to 8,000 $cm^2$/g or less, the crushing power during crushing does not become large, which is economical, and weathering is suppressed, so that deterioration of quality over time can be suppressed.

<Cement>

The cement used in the present invention is not particularly limited, but preferably contains Portland cement, and various types of Portland cement such as normal, early strength, super early strength, low heat, and moderate heat, can be given as examples. In addition, various mixed cements made by mixing these Portland cements with blast furnace slag, fly ash, or silica, waste-based cements produced by using municipal garbage incineration ash, sewage sludge incineration ash, etc. as raw materials, so-called Ecocement (R), filler cements mixed with limestone powder, and the like, can be given. Furthermore, geopolymer cement which emit less $CO_2$ than conventional cement, sulfoaluminate cement, and limestone calcined clay cement (LC3) can also be given . Among these, one or two or more of these can be used.

In the cement composition of the present embodiment, when the water binder ratio is low, it is beneficial for blast furnace cement and ecocement, which are strongly required to suppress carbonation, and it is most preferably used in combination with blast furnace cement.

The amount of cement admixture to be used is not particularly limited, but usually, when using only a dicalcium silicate compound as a cement admixture, 1 to 15 parts are preferred, 2 to 12 parts are more preferred, in 100 parts of a cement composition containing cement and cement admixture. When the used amount of cement admixture is small, a sufficient retained ratio of compressive strength and a retained ratio of Young's modulus after the sufficient reception of heat, and a sufficient carbonation resistance after the reception of heat may not be obtained, and when it is used in excess, a decrease in strength development may appear. In addition, when using a dicalcium silicate compound, a latent hydraulic substance, and/or a pozzolanic substance as a cement admixture, 1 to 50 parts are preferred, 5 to 30 parts are more preferred, in 100 parts of a cement composition containing cement and cement admixture. When the used amount of cement admixture is small, sufficient carbonation resistance after the reception of heat may not be obtained, and when it is used in excess, a sufficient retained ratio of Young's modulus may not be ensured.

[Cement composition]

In the present invention, a cement composition is prepared by blending cement and a cement admixture, or blending cement and a dicalcium silicate compound.

The used amount of the cement admixture is not particularly limited, but is usually preferably 5 to 80 parts, more preferably 5 to 50 parts, and still more preferably 10 to 40 parts in 100 parts of the total of the cement and the admixture. When it is 5 parts or more, the heat of hydration can be lowered, and when it is 80 parts or less (particularly 50 parts or less), strength development is improved.

The used amount of water in the cement composition of this embodiment is not particularly limited, and may be within a normal usage range. Specifically, the amount of water is preferably 25 to 70 parts, more preferably 30 to 65 parts, with respect to 100 parts of the total of the cement and present admixture. When it is 25 parts or more, sufficient workability can be obtained, and when it is 70 parts or less, sufficient strength development and carbonation (salt) promotion effects can be obtained.

In addition, in order to comply with the 32.5N/$mm^2$ standard using this cement admixture, approximately 10 to 20 parts of this cement admixture should be mixed in 100 parts of the present cement composition, regardless of the type of non-hydraulic compound. In addition, in order to comply with the 42.5 N/$mm^2$ standard product class, it is sufficient to mix about 20 to 35 parts in 100 parts of the present cement composition.

The particle size of the cement composition of the present embodiment is not particularly limited since it depends on the purpose and use of the cement composition, but usually, the Blaine specific surface area is preferably 2,500 to 8,000 $cm^2$/g, more preferably 3,000 to 6,000 $cm^2$/g. When it is 2,500 $cm^2$/g or more, sufficient strength development can be obtained, and when it is 8,000 $cm^2$/g or less, good workability can be obtained.

For the cement admixture and cement composition of the present invention, the respective materials may be mixed at the time of construction, or some or all of the materials may be mixed in advance. Further, the method of mixing each material and water is not particularly limited, and each material may be mixed at the time of construction, or some or all of the materials may be mixed in advance. Alternatively, after mixing a part of the material with water, the remaining material may be mixed.

In the present invention, in addition to cement, cement admixtures, fine aggregates such as sand, and coarse aggregates such as gravel, it is possible to use one or two or more of the group consisting of known additives and admixtures used in ordinary cement materials, for examples, air-cooled blast furnace slag powder, admixtures such as fine limestone powder, expanding agents, rapid hardening materials, water reducing agents, AE water reducing agents, high performance water reducing agents, high performance AE water reducing agents, antifoaming agents, thickeners, rust preventive agents, antifreeze agents, shrinkage reducers, polymers, setting modifiers, clay minerals such as bentonite, and additives such as anion exchangers such as hydrotalcite, within a range that does not substantially impair the object of the present invention.

As the mixing device, any existing device can be used, such as a tilting mixer, omni mixer, Henschel mixer, V-type mixer, and Nauta mixer.

Examples

Hereinafter, the present invention will be explained in more detail using Examples and Comparative Examples, but the present invention is not limited to the following Examples unless it departs from the gist of the invention.

<Evaluation method>

(1) Average particle diameter, average aspect ratio, average circularity

After embedding the cement admixture prepared in each example etc. in epoxy resin, it was cut with a diamond cutter. Thereafter, it was polished with #1200 silicon carbide abrasive paper, and mirror-finished using an abrasive (3 $\mu$m diamond paste). Next, using a 33% aqueous solution of ammonium chloride, etching was performed for 2 seconds, followed by microscopic observation.

The average particle diameter, average aspect ratio, and average circularity of the dicalcium silicate compound were measured by the method described in the description. The microscope used was "Eclipse E600POL" manufactured by Nikon Corporation, and the number of samples measured was 4,000. In addition, image analysis software ("IMAGEJ" manufactured by Wayne Rasband, National Institutes of Health, USA) was used.

(2) Identification of dicalcium silicate compounds

After carbon was deposited on the sample surface of the prepared cement admixture, it was identified through point analysis (50 analysis points) using electron microscopy and EDX (energy dispersive X-ray fluorescence spectrometer).

(3) Chemical composition

It was measured by fluorescent X-ray measurement. As the fluorescent X-ray measurement device, "ZSX-100e" manufactured by Rigaku Co., Ltd. was used.

(4) Retained ratio of Compressive strength

Compressive strength at 28 days of age was measured according to JIS R 5201 "Physical test method for cement". However, the test specimens were demolded when the material was 1 day of age, and then sealed and cured until the material age was 7 days, and thereafter, carbonation curing was applied under the conditions of temperature: 20 °C, humidity: 60% RH, and $CO_2$ concentration: 5%, until the material became 28 days of age. After that, to prevent explosion due to moisture dissipation in the test specimen, the test specimen was dried in a drying oven at 105 °C for 1 week, and then heated in an electric furnace at 500 °C for 3 hours, and by using this, the compressive strength at room temperature was measured. Furthermore, the compressive strength of the test specimens before drying and heat treatment was also measured at room temperature. The ratio of the compressive strengths before and after drying and heat treatment was determined as the retained ratio of compressive strength (compressive strength after drying and heat treatment/compressive strength before drying and heat treatment).

(5) Retained ratio of Young's modulus

Young's modulus was measured according to JIS A 1149 "Test method for static elastic modulus of concrete". The pretreatment method for the test specimen was the same as the test method for the retained ratio of the compressive strength. The ratio of Young's modulus before and after drying and heat treatment was determined as the retained ratio of Young's modulus (Young's modulus after drying and heat treatment/Young's modulus before drying and heat treatment).

(6) Carbonation resistance

After 3 hours of heat treatment, the $4\times4\times16$ cm specimen was subjected to accelerated carbonation in an environment of 30 °C, relative humidity of 60%, and carbon dioxide concentration of 5%, and after 8 weeks, the specimen was sliced into rings. A 1% alcohol solution of phenolphthalein was applied to the cracked cross section of the test specimen to check the carbonation depth. The pretreatment method for the test specimen was the same as the test method for the retained ratio of compressive strength. The carbonation resistance was evaluated based on the following formula.

$$\text{Carbonation resistance} = (\text{Carbonation depth after heat treatment} + \text{accelerated carbonation} \\ \text{(mm)}/\text{Carbonation depth before heating at 500 °C (mm)}) \times 100$$

(7) Final setting time

The final setting time was measured according to JIS R 5201 "Physical test method for cement".

[Experimental Examples 1-1 to 1-10]

Cement admixtures A to J were prepared as follows. Each cement admixture was identified by the above method as a DCS compound, and the average particle size, average aspect ratio, average circularity, and chemical composition as measured by the above method are as listed in Table 1.

(1-1) Cement admixture A: Calcium carbonate of 1st grade reagent and silicon dioxide of special grade reagent were mixed in a molar ratio of 2:1, and aluminum oxide of 1st grade regent was mixed to an internal ratio of 2 parts and mixed and milled in a planetary ball mill (manufactured by FRITSCH GmbH). The mixture was then heated at 1,400 °C for 2 hours, left to stand to room temperature, and a cement admixture A with a Blaine specific surface area of 4,000 cm$^2$/g, which is the fraction that passes through a 150 $\mu$m sieve, was prepared.

(1-2) Cement admixture B

It was produced in the same manner as the cement admixture A, except that silicon dioxide of special grade reagent was replaced by silica sand.

(1-3) Cement admixture C

It was produced in the same manner as cement admixture A, except that calcium carbonate of 1st grade reagent was replaced by limestone.

(1-4) Cement admixture D

It was produced in the same manner as cement admixture A, except that silicon dioxide of special grade reagent was replaced by fused silica.

(1-5) Cement admixture E

It was produced in the same manner as cement admixture B, except that silica sand that had passed through a sieve mesh of 150 μm was used.

(1-6) Cement admixture F

It was produced in the same manner as cement admixture A, except that the firing temperature was changed to 1,450 °C.

(1-7) Cement admixture G

It was produced in the same manner as cement admixture A, except that silicon dioxide of special grade reagent was replaced by silica sand, and the mixing and pulverization in a planetary ball mill was replaced by hand mixing.

(1-8) Cement admixture H

It was produced in the same manner as cement admixture A, except that mixing and pulverizing in a planetary ball mill was replaced by hand mixing.

(1-9) Cement admixture I

It was produced in the same manner as cement admixture G except that the residue on the sieve mesh of 150 μm of silica sand was used.

(1-10) Cement admixture J

It was produced in the same manner as cement admixture A except that silicon dioxide of special grade reagent was replaced by fused silica.

Table 1

| Experimental No. | Cement admixture | Average particle size (μm) | Average aspect ratio (-) | Average circularity (-) | $CaO/SiO_2$ Molar ratio | Chemical composition (%) | | | | | |
|---|---|---|---|---|---|---|---|---|---|---|---|
| | | | | | | CaO | $SiO_2$ | $Al_2O_3$ | MgO | $SO_3$ | Total |
| 1-1 | A | 5 | 1.9 | 0.6 | 2.32 | 67 | 31 | 2 | 0 | 0 | 100 |
| 1-2 | B | 90 | 1.9 | 0.6 | 2.32 | 67 | 31 | 2 | 0 | 0 | 100 |
| 1-3 | C | 100 | 1.9 | 0.6 | 2.32 | 67 | 31 | 2 | 0 | 0 | 100 |
| 1-4 | D | 90 | 1.3 | 0.6 | 2.32 | 67 | 31 | 2 | 0 | 0 | 100 |
| 1-5 | E | 90 | 2.0 | 0.6 | 2.32 | 67 | 31 | 2 | 0 | 0 | 100 |
| 1-6 | F | 90 | 1.9 | 0.5 | 2.32 | 67 | 31 | 2 | 0 | 0 | 100 |
| 1-7 | G | 90 | 1.9 | 0.8 | 2.32 | 67 | 31 | 2 | 0 | 0 | 100 |
| 1-8 | H | 4 | 1.9 | 0.6 | 2.32 | 67 | 31 | 2 | 0 | 0 | 100 |
| 1-9 | I | 101 | 1.9 | 0.6 | 2.32 | 67 | 31 | 2 | 0 | 0 | 100 |
| 1-10 | J | 90 | 1.2 | 0.6 | 2.32 | 67 | 31 | 2 | 0 | 0 | 100 |

[Experimental Examples 2-1 to 2-11]

The cement admixtures shown in Table 1 were mixed with cement to prepare a cement composition. The blending amount of the cement admixture was 20 parts in 100 parts of the cement composition. Note that Experimental Example 2-11 was a composition containing only cement, without blending cement admixture.

Next, a mortar specimen with a water/binder (cement composition) ratio of 0.5 was prepared according to JIS R 5201 "Physical test method for cement". Using this mortar specimen, the retained ratio of compressive strength, the retained ratio of Young's modulus, and carbonation resistance were measured according to the above evaluation method. The results are listed in Table 2. Note that the test was conducted at an environmental temperature of 30 °C.

Table 2

| Experimental No. | Cement admixture | Heating test | | Carbonation resistance after heating at 500 °C | Remarks |
|---|---|---|---|---|---|
| | | Retained ratio of compressive strength | Retained ratio of Young's modulus | | |
| 2-1 | A | 0.50 | 0.29 | 90 | Example |
| 2-2 | B | 0.60 | 0.30 | 95 | Example |
| 2-3 | C | 0.55 | 0.30 | 90 | Example |
| 2-4 | D | 0.48 | 0.28 | 90 | Example |
| 2-5 | E | 0.60 | 0.28 | 90 | Example |
| 2-6 | F | 0.59 | 0.27 | 90 | Example |
| 2-7 | G | 0.58 | 0.26 | 90 | Example |
| 2-8 | H | 0.41 | 0.25 | 90 | Comparative Example |
| 2-9 | I | 0.30 | 0.24 | 90 | Comparative Example |
| 2-10 | J | 0.35 | 0.26 | 50 | Comparative Example |
| 2-11 | (None) | 0.19 | 0.12 | 30 | Comparative Example |

[Experimental Examples 3-1 to 3-8]

Cement admixtures B-2 to B-9 were prepared as follows. Each cement admixture, as identified by the above method, contained a DCS compound , and the average particle size, average aspect ratio, and average circularity of the DCS as measured by the above method are as listed in Table 3. The chemical composition of the cement admixture are as shown in Table 3. The final setting time (time required to demold) measured by the above method is shown in Table 3. Furthermore, the retained ratio of compressive strength, the retained ratio of Young's modulus, and carbonation resistance measured in the same manner as in Experimental Example 2 are also listed in Table 3.

(3-1) Cement admixture B-2

It was produced in the same manner as the cement admixture A, by replacing silicon dioxide of special grade reagent by silica sand, replacing aluminum oxide by aluminum oxide of special grade reagent, and blending the raw materials so that the chemical composition is the numerical values listed in Table 3, in the above (1-1) production of cement admixture A.

(3-2) Cement admixture B-3

It was produced in the same manner as the cement admixture B-2, except that in the above (3-1), each raw material was blended so that the chemical composition is the numerical value listed in Table 3.

(3-3) Cement admixture B-4

It was produced in the same manner as the cement admixture B-2, except that in the above (3-1), each raw material was blended so that the chemical composition is the numerical value listed in Table 3.

(3-4) Cement admixture B-5

It was produced in the same manner as the cement admixture B-2, except that in the above (3-1), magnesium carbonate ($MgCO_3$) of 1st grade reagent was further blended as an MgO source, and each raw material was blended so that the chemical composition is the numerical value listed in Table 3.

(3-5) Cement admixture B-6

It was produced in the same manner as the cement admixture B-5, except that in the above (3-4), the amount of magnesium carbonate ($MgCO_3$) was changed, and each raw material was blended so that the chemical composition is the numerical value listed in Table 3.

(3-6) Cement admixture B-7

It was produced in the same manner as the cement admixture B-2, except that in the above (3-1), gypsum dihydrate ($CaSO_4 \cdot 2H_2O$) of the 1st grade reagent was further blended as the $SO_3$ source, and each raw material was blended so that the chemical composition is the numerical value listed in Table 3.

(3-7) Cement admixture B-8

It was produced in the same manner as the cement admixture B-7, except that in the above (3-6), the amount of gypsum dihydrate ($CaSO_4 \cdot 2H_2O$)was changed.

(3-8) Cement admixture B-9

It was produced in the same manner as the cement admixture B-2, except that in the above (3-1), magnesium carbonate ($MgCO_3$) of 1st grade reagent was further blended as an MgO source, gypsum dihydrate ($CaSO_4 \cdot 2H_2O$) of 1st grade reagent was further blended as the $SO_3$ source, and each raw material was blended so that the chemical composition is the numerical value listed in Table 3.

Table 3

| Experimental No. | Cement admixture | DCS compound | | | Chemical composition (%) | | | | | | Time required to demold (-h-m) | Heating test | | Carbonation resistance after heating at 500 °C | Remarks |
|---|---|---|---|---|---|---|---|---|---|---|---|---|---|---|---|
| | | Average particle size ($\mu$m) | Average aspect ratio (-) | Average circularity (-) | CaO | SiO$_2$ | Al$_2$O$_3$ | MgO | SO$_3$ | Total | | Retained ratio of compressive strength | Retained ratio of Young's modulus | | |
| 1-2 | B | 90 | 1.9 | 0.6 | 67 | 31 | 2 | 0 | 0 | 100 | 12h15m | 0.60 | 0.30 | 95 | Example |
| 3-1 | B-2 | 95 | 1.4 | 0.8 | 49 | 50 | 1 | 0 | 0 | 100 | 11h02m | 0.55 | 0.29 | 90 | Example |
| 3-2 | B-3 | 93 | 1.5 | 0.8 | 75 | 18 | 7 | 0 | 0 | 100 | 10h24m | 0.45 | 0.28 | 90 | Example |
| 3-3 | B-4 | 89 | 1.7 | 0.7 | 64 | 34 | 2 | 0 | 0 | 100 | 10h00m | 0.58 | 0.30 | 90 | Example |
| 3-4 | B-5 | 92 | 1.8 | 0.6 | 63 | 34 | 2 | 1 | 0 | 100 | 10h13m | 0.58 | 0.30 | 95 | Example |
| 3-5 | B-6 | 90 | 1.9 | 0.6 | 62 | 33 | 2 | 3 | 0 | 100 | 10h25m | 0.58 | 0.31 | 100 | Example |
| 3-6 | B-7 | 96 | 1.9 | 0.6 | 63 | 34 | 2 | 0 | 1 | 100 | 10h05m | 0.58 | 0.30 | 95 | Example |
| 3-7 | B-8 | 92 | 1.8 | 0.7 | 62 | 33 | 2 | 0 | 3 | 100 | 10h12m | 0.58 | 0.29 | 100 | Example |
| 3-8 | B-9 | 89 | 1.7 | 0.6 | 63 | 33 | 2 | 1 | 1 | 100 | 11h07m | 0.58 | 0.30 | 100 | Example |

[Experimental Examples 4-1 to 4-3]

The tests were conducted in the same manner as in Experimental Example 2, except that DCS compound B (Blaine specific surface area; 3000 cm$^2$/g) prepared in Experimental Example 1-2 was used and passed through a sieve to make a cement admixture with the fineness (Blaine specific surface area) shown in Table 4. The results are shown in Table 4.

Table 4

| Experimental No. | Cement admixture fineness (cm$^2$/g) | Heating test | | Carbonation resistance after heating at 500 °C | Remarks |
|---|---|---|---|---|---|
| | | Retained ratio of compressive strength | Retained ratio of Young's modulus | | |
| 1-2 | 3,000 | 0.60 | 0.30 | 95 | Example |
| 4-1 | 4,000 | 0.59 | 0.29 | 100 | Example |
| 4-2 | 5,000 | 0.59 | 0.28 | 95 | Example |
| 4-3 | 6,000 | 0.58 | 0.28 | 90 | Example |

[Experimental Examples 5-1 to 5-3]

Using the cement admixture B (Blaine specific surface area: 3,000 cm$^2$/g, calcium carbonate content: 0 parts) prepared in Experimental Example 1-2, after passed through a sieve, it was allowed to stand in a room at 50 °C, 60% of relative humidity, and $CO_2$ concentration of 20% to produce the cement admixtures containing calcium carbonate shown in Table 5. The test was conducted in the same manner as in Experimental Example 2, except that the evaluation was performed after the accelerated storage test shown below. The results are shown in Table 5.

(Accelerated storage test)

100 g of cement admixture was placed on a 20 $\times$ 20 cm square stainless-steel tray, spread out, and left in a room at 20 °C and 60% of relative humidity for 3 days with the top surface open. Mortar was prepared using the samples collected after 3 days, and physical properties were evaluated.

Table 5

| Experimental No. | The content of Calcium carbonate (parts) | Heating test after accelerated storage | | Carbonation resistance after accelerated storage and heating at 500 °C | Remarks |
|---|---|---|---|---|---|
| | | Retained ratio of compressive strength | Retained ratio of Young's modulus | | |
| 5-1 | 0 | 0.50 | 0.25 | 95 | Example |
| 5-2 | 0.5 | 0.58 | 0.28 | 97 | Example |
| 5-3 | 3 | 0.60 | 0.31 | 98 | Example |

[Experimental Examples 6-1 to 6-8]

In Experimental Example 2-2, a test was conducted in the same manner as in Experimental Example 2, except that cement admixture B and a latent hydraulic substance and/or a pozzolanic substance described below were used together. The results are shown in Table 6.

<Materials used>

Pozzolanic substance a (also serves as a latent hydraulic substance): commercially available granulated blast furnace slag powder, Blaine value: 4,000 cm$^2$/g

Pozzolanic substance b: commercially available silica fume, BET specific surface area 20 m$^2$/g

Pozzolanic substance c: commercially available fly ash, Blaine value 4,000 cm$^2$/g

Pozzolanic substance d: commercially available metakaolin, BET specific surface area 10 m$^2$/g

Pozzolanic substance e: commercially available pulp sludge incineration ash, Blaine value 4,000 cm$^2$/g

Pozzolanic substance f: Commercially available sewage sludge incineration ash, Blaine value 9,000 cm$^2$/g

Pozzolanic substance g: Commercially available waste glass powder, Blaine value 4,000 cm$^2$/g

Pozzolanic substance h: mixture of 50 parts of pozzolanic substance a and 50 parts of pozzolanic substance b, Blaine value 10,000 cm$^2$/g

<Evaluation method>

(1) Chloride penetration depth

Penetration resistance of chloride ion was evaluated. A cylindrical mortar specimen of 10 cmϕ × 20 cm was prepared, and the prepared mortar specimen was cured in water at 30 °C until the material became 28 days of age, and then immersed in simulated seawater, which is saline water with a salinity concentration of 3.5%, at 30 °C for 12 weeks, and then the chloride penetration depth was measured. The chloride penetration depth was determined by the fluorescein-silver nitrate method, and the portion of the cross section of the mortar specimen that did not turn brown was regarded as the chloride penetration depth, and was measured at 8 points with a caliper to determine the average value.

(2) Elution of Ca ions

The determination was made by immersing a 4×4×16 cm mortar specimen in 10 liters of pure water for 28 days and measuring the concentration of Ca ions dissolved in the liquid phase.

(3) Self-healing ability

A 10×10×40 cm mortar specimen was prepared by mixing 0.15% by mass of 6 mm nylon fibers, and cracks with a width of 0.3 mm were introduced by bending stress. After being immersed in simulated seawater for 180 days, the crack width was measured. The evaluation criteria were as follows.

A: The crack was completely closed.
B: The crack width was reduced to 0.1 mm or less
C: The crack width was reduced to about 0.2 mm.
D: The crack width was not reduced, or on the contrary, it was widened.

Table 6

| Experimental No. | Pozzolanic substance | Heating test | | Carbonation resistance after heating at 500 °C | Chloride penetration depth (mm) | Elution of Ca ions (mg/l) | Self-healing ability | Remarks |
|---|---|---|---|---|---|---|---|---|
| | | Retained ratio of compressive strength | Retained ratio of Young's modulus | | | | | |
| 6-1 | a | 0.60 | 0.31 | 96 | 0 | 3 | A | Example |
| 6-2 | b | 0.61 | 0.30 | 95 | 1 | 3 | A | Example |
| 6-3 | c | 0.60 | 0.31 | 95 | 1 | 4 | A | Example |
| 6-4 | d | 0.57 | 0.27 | 92 | 2 | 3 | A | Example |
| 6-5 | e | 0.58 | 0.28 | 93 | 3 | 5 | B | Example |
| 6-6 | f | 0.56 | 0.26 | 92 | 4 | 5 | B | Example |
| 6-7 | g | 0.57 | 0.25 | 91 | 4 | 5 | B | Example |
| 6-8 | h | 0.63 | 0.32 | 96 | 2 | 2 | A | Example |

From the results in Tables 1 and 2, it can be seen that the cement composition blended with cement admixtures containing DCS compounds is excellent is all of the retained ratio of compressive strength, the retained ratio of Young's modulus, and the carbonation resistance after heating at 500 °C.

On the other hand, it can be seen that the cement compositions blended with the cement admixture H containing a DCS compound having an average particle size of less than 5 $\mu$m, and the cement admixture I containing a DCS compound having an average particle size of more than 100 $\mu$m both have a small retained ratio of compressive strength and a small retained ratio of Young's modulus. Furthermore, it can be seen that the cement composition blended with the cement admixture J containing a DCS compound having an average aspect ratio of less than 1.3 has poor carbonation resistance after heating at 500 °C.

Moreover, from the results in Table 3, it can be seen that the cement composition blended with the DCS compound according to the present invention has a short time required to demold and has high productivity.

Further, from the results in Table 4, it can be seen that when the Blaine specific surface area is in the range of 3,000 to 6,000 cm²/g, an extremely good strength development can be obtained.

In addition, from the results in Table 5, it can be seen that by blending an appropriate amount of calcium carbonate into the cement admixture, better results are shown in all of the retained ratio of compressive strength, the retained ratio of Young's modulus, and the carbonation resistance after heating at 500 °C, compared to the case of the DCS compound alone.

Furthermore, from the results in Table 6, it can be seen that by further blending a latent hydraulic substance and/or a pozzolanic substance into the DCS compound, excellent chloride ion penetration resistance and the effect of inhibition of Ca ion elution are obtained, and self-healing ability is improved, compared to the the case of DCS compound alone.

Industrial applicability

The present invention can be particularly suitably used in cement admixtures used in the civil engineering field, construction field, etc.

**Claims**

1. A cement admixture comprising a dicalcium silicate compound having an average particle diameter of 5 to 100 $\mu$m as measured by microscopic observation and also having an average aspect ratio represented by (major axis diameter/minor axis diameter) of 1.3 or more.

2. The cement admixture according to claim 1,
   wherein the dicalcium silicate compound has an average value of circularity expressed by (4 $\times$ circumference ratio $\pi$ $\times$ area/(square of circumferential length)) of 0.8 or less.

3. The cement admixture according to claim 1 or 2,

   wherein the chemical composition is 44 to 75 parts by mass of CaO, 18 to 55 parts by mass of SiO$_2$, 1 to 3 parts by mass of Al$_2$O$_3$, 0 to 5 parts by mass of MgO, and 0 to 2 parts by mass of SO$_3$, with respect to 100 parts by mass of the total of CaO, SiO$_2$, Al$_2$O$_3$, MgO, and SO$_3$, and
   wherein a Blaine specific surface area value is 2,000 to 6,000 cm²/g.

4. The cement admixture according to any one of claims 1 to 3, further comprising 5 parts by mass or less of calcium carbonate with respect to 100 parts by mass of the cement admixture.

5. The cement admixture according to any one of claims 1 to 4, furthermore comprising slag and/or pozzolanic substances.

6. The cement admixture according to claim 5,
   wherein the slag and/or pozzolanic substances have one or more selected from the group consisting of blast furnace slag (air-cooled blast furnace slag, granulated blast furnace slag), steelmaking slag (converter slag, electric furnace slag), fly ash, silica fume, metakaolin, pulp sludge incineration ash, sewage sludge incineration ash, volcanic glass fine powder, and waste glass powder.

7. The cement admixture according to claim 5 or 6,

wherein a mixing ratio of the dicalcium silicate compound and the slag and/or pozzolanic substances is 10/1 to 1/10 in mass ratio.

8. A method for producing a cement admixture, comprising adjusting a clinker to have a Blaine specific surface area value of 2,000 to 6,000 cm$^2$/g, the clinker being obtained by blending a raw material containing CaO, a raw material containing SiO$_2$ and a raw material containing SO$_3$ so that the CaO/SiO$_2$ molar ratio is 1.3 to 3.0 and the SO$_3$ content is 0 to 3% by mass, and heat-treated at 1,000 °C or higher and 1,800 °C or lower.

9. A cement composition comprising:

   cement; and
   the cement admixture according to any one of claims 1 to 7.

## INTERNATIONAL SEARCH REPORT

| International application No. |
| --- |
| **PCT/JP2022/031074** |

**A. CLASSIFICATION OF SUBJECT MATTER**

*C04B 22/08*(2006.01)i; *C04B 14/10*(2006.01)i; *C04B 14/22*(2006.01)i; *C04B 18/10*(2006.01)i; *C04B 18/14*(2006.01)i; *C04B 22/10*(2006.01)i; *C04B 28/02*(2006.01)i
FI: C04B22/08 Z; C04B22/10; C04B18/14 A; C04B18/14 C; C04B18/14 F; C04B14/10 A; C04B18/10 Z; C04B14/22; C04B28/02

According to International Patent Classification (IPC) or to both national classification and IPC

**B. FIELDS SEARCHED**

Minimum documentation searched (classification system followed by classification symbols)

C04B22/08; C04B14/10; C04B14/22; C04B18/10; C04B18/14; C04B22/10; C04B28/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-20944 A (DENKA CO LTD) 08 February 2018 (2018-02-08) entire text, all drawings | 1-9 |
| A | JP 7-48120 A (KAWATETSU MINING CO LTD) 21 February 1995 (1995-02-21) entire text, all drawings | 1-9 |
| A | JP 2002-256508 A (TAIHEIYO CEMENT CORP) 11 September 2002 (2002-09-11) entire text, all drawings | 1-9 |
| A | JP 2004-51426 A (DENKI KAGAKU KOGYO KK) 19 February 2004 (2004-02-19) entire text, all drawings | 1-9 |
| A | WO 2012/105102 A1 (DENKI KAGAKU KOGYO KK) 09 August 2012 (2012-08-09) entire text, all drawings | 1-9 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 October 2022** | **01 November 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/031074**

| Patent document cited in search report | | | Publication date (day/month/year) | Patent family member(s) | Publication date (day/month/year) |
|---|---|---|---|---|---|
| JP | 2018-20944 | A | 08 February 2018 | (Family: none) | |
| JP | 7-48120 | A | 21 February 1995 | (Family: none) | |
| JP | 2002-256508 | A | 11 September 2002 | (Family: none) | |
| JP | 2004-51426 | A | 19 February 2004 | (Family: none) | |
| WO | 2012/105102 | A1 | 09 August 2012 | CN 103328383 A entire text, all drawings | |

Form PCT/ISA/210 (patent family annex) (January 2015)

**EP 4 342 864 A1**

**Patent documents cited in the description**

- JP H5220881 A
- JP 2010120839 A
- JP 2018020944 A
- JP H10194798 A
- JP 2007022878 A